# EUROPEAN PATENT SPECIFICATION

(11) **EP 3 611 724 B1**
(45) Date of publication and mention of the grant of the patent: **21.05.2025**
(21) Application number: 18784958.3
(22) Date of filing: 10.04.2018
(51) Int. Cl.: G10L 15/22, G06F 3/16, H04L 51/02, G10L 21/0208

(54) **VOICE RESPONSE METHOD AND DEVICE, AND SMART DEVICE**
SPRACHANTWORTVERFAHREN UND -VORRICHTUNG UND INTELLIGENTE VORRICHTUNG
PROCÉDÉ ET DISPOSITIF DE RÉPONSE VOCALE, ET DISPOSITIF INTELLIGENT

(30) Priority: 10.04.2017 CN 201710230096
(43) Date of publication of application: 19.02.2020
(73) Proprietor: Beijing Orion Star Technology Co., Ltd., Beijing 100026 (CN)
(72) Inventor: CHEN, Junyu, Beijing 100026 (CN); JIA, Lei, Beijing 100026 (CN); LIU, Yuanyuan, Beijing 100026 (CN); PENG, Shouye, Beijing 100026 (CN)
(74) Representative: Liebetanz, Michael
(86) International application number: PCT/CN2018/082508
(87) International publication number: WO 2018/188587

(56) References cited:
- EP-A1- 3 067 884
- WO-A1-2007/087682
- CN-A- 105 632 486
- CN-A- 106 200 411
- CN-A- 106 448 664
- CN-A- 106 469 040
- CN-A- 107 146 611
- US-A1- 2004 260 549
- US-A1- 2016 019 891
- US-A1- 2017 025 124

## Description

The present application claims the priority to a Chinese patent application No. 201710230096.4 filed with the China National Intellectual Property Administration on April 10, 2017 and entitled "Voice response method, apparatus and intelligent device".

### Technical Field

The present application relates to the field of intelligent device technology, and in particular, to a voice response method, apparatus and intelligent device.

### Background

Intelligent devices of various types are emerging currently, and are being used widely. Intelligent devices generally include, for example, intelligent robots, intelligent speakers. Existing intelligent devices are able to respond to voice commands from users. For example, a user may send a voice, such as "I want to listen to 'Red Bean'" or "Play 'Red Bean'", as a command to an intelligent device, requesting the intelligent device to play audio, video, or other multimedia resources (the "Red Bean" is an audio resource). Upon receiving the voice command, the intelligent device may play the multimedia resource requested by the user.

Generally, the user need to use a specific wake-up word to wake up the intelligent device, such that the intelligent device can respond to the voice command sent by the user after being woken up. There is usually a time interval between speaking a wake-up word and sending a voice command by the user. During this time interval, the intelligent device does not provide any response, which makes the user unsure whether the device is woken up, resulting in a bad user experience.

Also, in the art are known some methods or devices as described in their respective documents.

For example, US 2017/025124 A1 discloses a method at a first electronic device of multiple electronic devices, each electronic device of the plurality of electronic devices including one or more microphones and a speaker, includes detecting a voice input; determining a quality score for the detected voice input; communicating the quality score to the other devices of the plurality of electronic devices; receiving quality scores generated by the other devices for detection of the voice input by the other devices; if the quality score generated by the first electronic device is the highest amongst the quality scores, outputting an audible and/or visual response to the detected voice input, where the other devices of the plurality of electronic devices forgo outputting an audible response to the detected voice input; and if the quality score generated by the first electronic device is not the highest amongst the quality scores, forgoing outputting a response to the detected voice input.

WO 2007/087682A1 discloses a human-like response emulator, which stores a library comprising one or more different subject matter data structures. Each data structure comprising a set of stimuli related to the subject matter of the data structure and one or more output instructions associated with each stimulus. Each output instruction is for producing a human-like response to the associated stimulus. The emulator receives a stimulus. The emulator looks up output instructions in each data structure that are associated with the received stimulus. The emulator outputs one or more responses to the received stimulus according to the found output instructions.

US 2004/260549A1 discloses a voice recognition system includes an adaptive filter and a subtractor. The adaptive filter generates a simulated talk-back voice y(n) by setting a filter coefficient simulating a transfer system in which an input voice corresponding to a voice command and a talk-back voice output from a speaker are input into a microphone and by filtering a talk-back voice x(n). The subtractor extracts the input voice by subtracting the simulated talk-back voice y(n) from mixed sound input into the microphone.

US 2016/019891A1 discloses a system and method for adaptively processing audio commands supplied by a user in an aircraft cabin, and includes receiving ambient noise in the aircraft cabin via one or more audio input device, sampling, with a processor, the received ambient noise, and analyzing, in the processor, the sampled ambient noise and, based on the analysis, selecting one or more filter functions and adjusting one or more filter parameters associated with the one or more selected filter functions. Audio and ambient noise are selectively received via the one or more audio input devices, and are filtered, through the selected one or more filter functions, to thereby supply filtered audio.

### Summary

It is an object of the invention to overcome the shortcomings in the prior art.

This object of the invention is solved by the independent claims. Specific embodiments are defined in the dependent claims.

### Brief Description of the Drawings

In order to more clearly describe the technical solution of the embodiments of the application and the prior art, drawings for the embodiments and the prior art will be briefly described below. Obviously, the drawings described below are for only some embodiments of the present application, one of ordinary skills in the art can also obtain other drawings based on the drawings described herein without any creative efforts.
FIG. 1 is a first flow chart schematically depicting a voice response method provided by an embodiment of the present application;
FIG. 2 is a second flow chart schematically depicting a voice response method provided by an embodiment of the present application;
FIG. 3 is a third flow chart schematically depicting a voice response method provided by an embodiment of the present application;
FIG. 4 is a diagram schematically depicting the structure of a voice response apparatus provided by an embodiment of the present application;
FIG. 5 is a diagram schematically depicting the structure of an intelligent device provided by an embodiment of the present application; and
FIG. 6 is a diagram schematically depicting the structure of another intelligent device provided by an embodiment of the present application.

### Detailed Description

To make the objectives, technical solutions and advantages of the present application more apparent, a detailed description of the present application now is provided below in association with embodiments and with reference to the accompanying drawings. Obviously, the embodiments described are only some instead of all of the embodiments of the present application. All further embodiments obtained by those of ordinary skills in the art based on the embodiments herein without any creative efforts are within the scope of the present application.

The technical solutions of the present application will be described in detail below with reference to the drawings for the embodiments of the present application. Obviously, the embodiments described are only some instead of all of the embodiments of the present application. All further embodiments obtained by those of ordinary skills in the art based on the embodiments herein without any creative efforts are within the scope of the present application.

In order to solve the technical problem noted above, the embodiments of the present application provide a voice response method, apparatus, and intelligent device. The method and apparatus may be applicable to various intelligent devices, such as intelligent speakers, intelligent players, intelligent robots, etc., which are not specifically limited.

A voice response method according to an embodiment of the present application will be described in detail below.

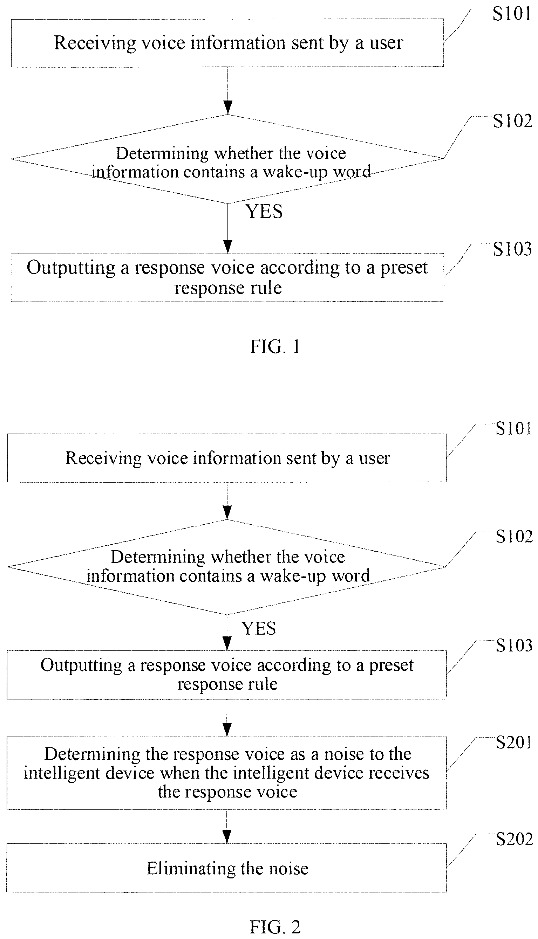

FIG. 1 is a first flow chart schematically depicting a voice response method provided by an embodiment of the present application, which includes operations S101-S103.

S101: voice information sent by a user is received.

S102: a determination is made as to whether the voice information contains a wake-up word. The flow proceeds to S103 if there is a wake-up word in the voice information.

A wake-up word is a word or words used to wake up an intelligent device. Once the intelligent device determines that there is a wake-up word in the voice information, the intelligent device will be in a wake-up state and can respond to a voice command sent by the user.

S103: a response voice is output according to a preset response rule.

The response voice is based on the wake-up word. The intelligent device outputs the response voice, which can notify the user that the intelligent device has been in the wake-up state.

As an implementation manner, the determination as to whether the voice information contains a wake-up word may be made as follows.

The voice information is input into a pre-stored model for recognition. The model is obtained by learning from wake-up words.

The determination as to whether the voice information contains a wake-up word is made according to the recognition result.

In this implementation manner, wake-up words may be learned for modeling in advance. Those skilled in the art may appreciate that voice information for the wake-up words may be acquired from different users. The voice information is learned by using a machine learning algorithm, to establish a model for the wake-up words. For example, a deep neural network may be trained with data of wake-up voices to establish a voice recognition model. The machine learning algorithm is not limited herein.

The voice information acquired in S101 is input into the model for recognition. If the recognition result includes a wake-up word, it indicates that the voice information contains the wake-up word.

In this implementation manner, the voice information is directly input into a model stored locally on the intelligent device for recognizing a wake-up word. Compared with a solution where the voice information is sent to another device and is analyzed by this device to determine whether there is a wake-up word, such an implementation manner allows reduced time for communication between devices and a quick reaction.

The operation of S103 can be performed in various manners, several of which are described below.

In a first manner for implementing S103, the intelligent device is configured with a plurality of response modes, for which different response voices can be output, for example, a response voice of "Hi", "Yes", "I am here", or other similar response voices may be output.

When it is determined in S102 that the voice information contains a wake-up word, a response mode is randomly selected from those response modes, and a response voice corresponding to the selected response mode is output.

In this manner, the intelligent device may be connected to a cloud server, and the cloud server may send information for adjusting response modes to the intelligent device every preset time period. The information for adjusting response modes may include a new response mode or modes, and/or may include other information, which is not limited herein. The intelligent device may adjust the response modes configured thereon based on the information for adjusting response modes.

The response modes of the intelligent device may be adjusted in various ways. For example, the new response mode or modes included in the information for adjusting response modes may be added to the intelligent device; or the original response mode or modes in the intelligent device may be replaced with the new response mode or modes included in the information for adjusting response modes; or the response mode or modes included in the information for adjusting response modes may be combined with the original response mode or modes in the intelligent device to form a further new response mode or modes, etc.

By way of an example, the original response modes in the intelligent device includes: "Hi", "Yes", and "I am here". The cloud server obtains a nickname "Nana" of the user who uses the intelligent device, and determines "Nana" as the information for adjusting response modes for the intelligent device. The cloud server sends the information for adjusting response modes to the intelligent device. The intelligent device may combine "Nana" with the original response modes to form new response modes, which are: "Hi, Nana", "Yes, Nana", and "I am here, Nana".

With this manner, the user can determine whether the device is woken up according to the response of the device, and can have a better experience. Further, the device can adjust, i.e., update, the response modes configured thereon with the information for adjusting response modes sent by the cloud server, which can make the response more interesting.

In a second manner for implementing S103, the intelligent device configures different response modes for different time periods. For example, a response mode for a time period of "Morning" may be: an output of a response voice of "Yes, good morning", or "Good morning", or "Master, good morning", or other similar responsive voices. Similarly, a response mode for a time period of "Afternoon" may be: an output of a response voice of "Yes, good afternoon", or " Good afternoon", or "Master, good afternoon", or other similar response voices.

When it is determined in S102 that the voice information contains a wake-up word, the intelligent device determines a current time; determines a response mode associated with the current time from a preset correspondence between time periods and response modes; and outputs a response voice corresponding to the determined response mode.

For example, it is determined in S102 that the voice information contains a wake-up word. The intelligent device determines that the current time is 8:00 in the morning. The response mode for a time period of 6:00-9:00 in the morning configured in the intelligent device is "Master, good morning" For this case, a response voice of "Master, good morning" is be output.

In this manner, the intelligent device may be connected to a cloud server, and the cloud server may send information for adjusting response modes to the intelligent device every preset time period. The information for adjusting response modes may include a new response mode or modes or other information. The intelligent device may adjust the response modes configured thereon based on the information for adjusting response modes.

There are various ways to adjust the response modes of the intelligent device. For example, the new response mode or modes included in the information for adjusting response modes may be added to the intelligent device; or the original response mode or modes in the intelligent device may be replaced with the new response mode or modes included in the information for adjusting response modes; or the response mode or modes included in the information for adjusting response modes may be combined with the original response mode or modes in the intelligent device to form a further new response mode or modes, etc.

By way of an example, the original response modes in the intelligent device includes the following items set for different time periods, such as "Master, good morning", "Master, good afternoon". The cloud server obtains a nickname "Nana" of the user who uses the intelligent device, and determines "Nana" as the information for adjusting response modes for the intelligent device. The cloud server sends the information for adjusting response modes to the intelligent device. The intelligent device may combine "Nana" with the original response modes to form new response modes, which are: "Nana, good morning", "Nana, good afternoon", etc.

With this manner, in the first aspect, the user can determine whether the device is woken up according to the response of the device, and can have a better experience. In the second aspect, the device may make different responses for different time periods, and improve the flexibility of the response. In the third aspect, the device can adjust, i.e., update, the response modes configured thereon with the information for adjusting response modes sent by the cloud server, which can make the response more interesting.

In a third manner for implementing S103, after outputting a response voice each time, the intelligent device records the response mode corresponding to the output response voice as a last response mode. When the intelligent device receives voice information sent by the user at a later time and the voice information contains a wake-up word, the intelligent device searches the last response mode in a pre-stored response mode list; determines a response mode after the last response mode is determined as a current response mode according to their order in the list; and outputs the response voice corresponding to the current response mode.

For example, the response modes included in the pre-stored response mode list of the intelligent device is: "Hi", "Yes", "I am here", "Master, hello". The response voice that is last output is "Yes" and this response mode "Yes" is recorded as the "last response mode".

The intelligent device receives voice information sent by the user and the voice information contains a wake-up word. In this case, the intelligent device will take "I am here" as a current response mode according to the order of the response modes in the list, and outputs a response voice "I am here".

In this manner, the order of the response modes in the list may be understood as a circular order. If the last response mode is "Master, hello", the current response mode will be "Hi".

In a fourth manner for implementing S103, after outputting a response voice each time, the intelligent device records the response mode corresponding to the output response voice as a last response mode. When the intelligent device receives voice information sent by the user at a later time and is the voice information contains a wake-up word, the intelligent device selects a target response mode different from the last response mode from at least two preset response modes; and outputs a response voice corresponding to the target response mode.

For example, the preset response modes pre-configured on the intelligent device include: "Hi", "Yes", "I am here", "Master, hello". The response voice that is last output is "Yes" and this response mode "Yes" is recorded as the "last response mode".

The intelligent device receives voice information sent by the user and the voice information contains a wake-up word. In this case, the intelligent device selects a target response mode is from three response modes except for "Yes". If "Master, hello" is the selected as the target response mode, the intelligent device will outputs a response voice "Master, hello".

In the third and fourth manner for implementing S103, the intelligent device may also be connected to a cloud server, and the cloud server may send information for adjusting response modes to the intelligent device every preset time period. The information for adjusting response modes may include a new response mode or modes or other information. The intelligent device may adjust the response modes configured thereon based on the information for adjusting response modes.

There are various ways to adjust the response modes of the intelligent device, For example, the new response mode or modes included in the information for adjusting response modes may be added to the intelligent device; or the original response mode or modes in the intelligent device may be replaced with the new response mode or modes included in the information for adjusting response modes; or the response mode or modes included in the information for adjusting response modes may be combined with the original response mode or modes in the intelligent device to form a further new response mode or modes, etc..

In a fifth manner of implementing S103, a cloud server may send news voice to the intelligent device, such as, voice with weather conditions (weather information), voice with news information (media information), and the like. The cloud server may send news voice to the intelligent device every preset time period. Alternatively, the cloud server may send the latest news voice to the intelligent device when it detects there are news update, which is not limited herein.

After determining that the user has sent a wake-up word (it is determined that in S102 that the voice information contains a wake-up word), the intelligent device determines a current time and news voice that corresponds to the current time, and outputs the response voice and the news voice.

Taking the weather information as an example, the cloud server may determine the current weather condition where the intelligent device is located every preset time period, and send news voice to the intelligent device based on the weather condition. The intelligent device stores the news voice; and determines the current time and news voice corresponding to the current time and outputs the response voice and the news voice after determining that the user has sent a wake-up word.

For example, the intelligent device is located at " Xicheng district, Beijing". The cloud server may determine the weather condition of " Xicheng district, Beijing" every day. The weather condition of "Xicheng district, Beijing" on April 5, 2017 is assumed to be that "it is sunny, and the air quality is good". The cloud server determines a news voice as "It's a nice day" based on the weather condition "it is sunny, and the air quality is good", and sends this news voice to the intelligent device.

The intelligent device stores the news voice. When it is determined in S102 that the voice information contains a wake-up word, the intelligent device determines the current time is 8:00 a.m. on April 5, 2017, and outputs a response voice with a news voice, which is "Master, good morning, it's a nice day".

In this manner, in the first aspect, the user can determine whether the device is woken up according to the response of the device, and can have a better experience. In the second aspect, the news voice may be output, which brings great convenience to the user.

In a sixth manner for implementing S103, the intelligent device may mark events for some time periods and store voices for the marked events. For example, time periods of holidays may be marked. As an example, the data of January 1st may be marked as the New Year's Day and a voice for this marked event may be "Happy New Year". As another example, the data of February, 14th may be marked as the Valentine's Day and a voice for this marked event may be "Happy Valentine's Day", and the like.

In this way, in the case that it is determined in S102 that the voice information contains a wake-up word, the intelligent device checks whether the current time period is associated with a voice for a marked event. If the current time period is January 1st, the voice for the marked event is determined as "Happy New Year"; the response voice and the voice for the marked event may be output as "Here, Happy New Year".

Alternatively, the intelligent device may obtain "a time period and a corresponding voice for a marked event" from the cloud server. It can be appreciated that the cloud server may obtain user information, and determine "a time period and a corresponding voice for a marked event" according to the user information. The cloud server sends "a time period and a corresponding voice for a marked event" to the intelligent device.

For example, the user information may include the user's birthday. The cloud server may mark an event for the time period of "the user's birthday", and the voice for the marked event may be "Happy Birthday". The cloud server sends the time period ("the user's birthday") and the voice ("Happy Birthday") to the intelligent device.

The intelligent device stores the voice for the marked event for this time. In the case that it is determined in S102 that the voice information contains a wake-up word, if the intelligent device detects that the current time period is associated with a voice for marked event (i.e., "Happy Birthday"), it will output the response voice and the voice for the marked event "Yes, Happy New Year".

For another example, the user information may include the birthday of one of the user's relatives or friends. The cloud server may mark an event for the time period of "the birthday of the user's relative or friend", and the voice for the marked event may be, for example, "Don't forget to celebrate **'s birthday". The cloud server sends the time period ("the birthday of the user's relative or friend") and the voice ("Don't forget to celebrate **'s birthday") to the intelligent device. In this embodiment, "**" can be a person's name, and can be understood as "somebody".

The intelligent device stores the voice for the marked event for the time. In the case that it is determined in S102 that the voice information contains a wake-up word, if the intelligent device detects that the current time is associated with a voice for a marked event ("Don't forget to celebrate **'s birthday"), it outputs the response voice and the voice for the marked event as "Here, don't forget to celebrate **'s birthday".

For yet another example, the user information may further include reminder information set by the user. For example, the user may set a reminder for the date of April 5, 2017 on a terminal device of the user as: remember to call customer A. The terminal device uploads the reminder information into the cloud server. In this way, the cloud server may mark an event for the time period of "April 5, 2017", and the voice of the marked event can be "Remember to call customer A". The cloud server sends the time period ("April 5, 2017") and the voice ("Remember to call customer A") to the intelligent device.

The intelligent device stores the voice of the marked event for the time period. In the case that it is determined in S102 that the voice information contains a wake-up word, if the intelligent device checks that the current time period is associated with a voice for a marked event ("Remember to call customer A"), the intelligent device outputs a response voice and the voice for the marked event "Yes, remember to call customer A".

In this manner, the cloud server may send update information to the user when detecting that the user information is updated, or may send the update information to the user every preset time period. The update information includes "a time period and a corresponding voice for a marked event". After receiving the update information, the intelligent device adjusts a voice for a marked event configured thereon according to the update information.

For example, the user changes the reminder of "Remember to call customer A" on April 5, 2017 to "Remember to call customer B" in the user's terminal device. The terminal device uploads the reminder onto the cloud server. The cloud server detects that the user information has been updated, and determines that the update information is: a voice for the marked event for the date of "April 5, 2017" is "Remember to call customer B". The cloud server sends the update information to the intelligent device.

After receiving the update information, the intelligent device adjusts a voice for the marked event, for example, adjusts the voice for the marked event for "April 5, 2017" to "Remember to call customer B".

In this way, in the case that it is determined in S102 that the voice information contains a wake-up word, if the intelligent device determines that the current time period is April 5, 2017 and that a voice for a marked event for this time period is "Remember to call customer B", the intelligent device outputs the response voice "Yes, remember to call customer B".

With this implementation manner, in the first aspect, the user can determine whether the device is woken up according to the response of the device, and can have a better experience. In the second aspect, the device can respond to the wake-up voice from the user and remind the user of a marked event at the same time, further providing a better experience.

In responding to a voice with the solution provided by the embodiment shown in FIG. 1, if there is a wake-up word in voice information received by the intelligent device, the intelligent device outputs a response voice according to a preset response rule. That is, after the user sends a wake-up word, the intelligent device outputs a voice to respond to the wake-up word. Therefore, the user can directly determine that the device has been woken up and can have a better experience.

FIG. 2 is a second schematic flow chart of a voice response method according to an embodiment of the present application. FIG. 2 is a combination of the steps in FIG. 1 with the addition of steps S201-S202 after S103.

S201: the intelligent device determines the response voice as a noise to itself when receiving the response voice.

S202: the noise is eliminated.

Those skilled in the art can appreciate that after the intelligent device outputs the response voice, the response voice can also be acquired by the intelligent device. The response voice may affect a voice that the intelligent device received from the user, therefore, the intelligent device may eliminate the response voice as a noise to itself.

In responding to a voice response with the solution provided by the embodiment shown in FIG. 2, the response voice is eliminated as a noise to the intelligent device, which can reduce the influence of the response voice on the voice sent by the user. In this way, the voice sent by the user can be acquired more clearly, which can provide a better service for the users.

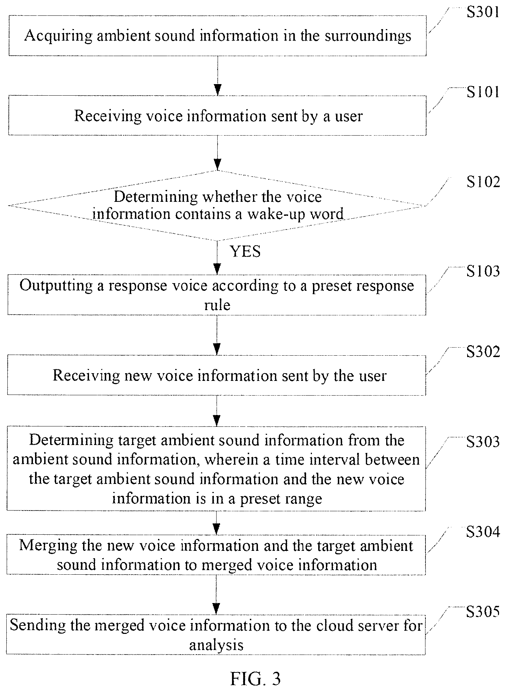

FIG. 3 shows a third schematic flow chart of a voice response method according to an embodiment of the present application. FIG. 3 is a combination of the steps in FIG. 1 with the addition of S301 before S101 and the addition ofS302-S305 after S103.

S301: ambient sound information in the surroundings is acquired.

In an embodiment of FIG. 3, ambient sound information in the surroundings is acquired before the intelligent device is woken up. The "ambient sound information" may include all sound information that can be acquired, which includes voice information sent by the user.

S302: new voice information sent by the user is received.

Here, in order to distinguish from the voice information received in S101, the voice information received in S302 is referred to as "new voice information". If new voice information sent by the user is received, the subsequent steps will be performed; and if no new voice information is received from the user, the no subsequent steps will be performed.

It can be appreciated that the user first sends a wake-up word to wake up the intelligent device, and then the user may send a command to the intelligent device. The voice information in S101 may be understood as the first sent wake-up word, and the "new voice information" in S302 may be understood as the command sent by the user.

S303: target ambient sound information is determined from the ambient sound information, wherein a time interval between the target ambient sound information and the new voice information is within a preset range.

S304: the new voice information is merged with the target ambient sound information to form merged voice information.

S305: the merged voice information is sent to the cloud server for analysis.

If the time interval between the sending of the wake-up word and issuing of the command by the user is less than the time for playing the response voice in S103, the intelligent device may not be able to acquire all the voices sent by the user.

The voice information acquired from the user after the response voice is output by the intelligent device is taken as the "new voice information". If there is a time overlap between the process of "outputting response voice" and the process of "sending voice information by the user", the "new voice information" do not contain voice information sent by the user in the overlapped time, namely which voice information is lost.

In this case, in the embodiment of the voice response method shown in FIG. 3, the intelligent device acquires and continuously acquires sound before being woken up. After the intelligent device is woken up and then receives "new voice information" sent by the user, the intelligent device determines "target ambient sound information" from the ambient sound information, where the time interval between the "target ambient sound information" and the "new voice information" is within a preset range; and merges the "new voice information" with the "target ambient information". In this way, the no voice information from the user will not be lost. The intelligent device sends the merged voice information (i.e., the complete voice information) to the cloud server for analysis, which can result in a better analysis result. Therefore, the intelligent device can provide a better service on the basis of the better analysis result.

It can be appreciated that the time interval between the lost voice information of the user in the above situation and the "new voice information" received in S302 is very small, both the voice information may be merged to form one piece of complete voice information. The continuously acquired "ambient sound information" may include sound information in a long time. In this case, the target ambient sound information may be selected from "ambient sound information" such that the time interval between the target ambient sound information and the "new sound information" is small (within a preset range). The intelligent device may merge only the selected target ambient sound information with "new voice information" to obtain a complete or entire voice information.

Based on the same concept of the method embodiments described above, embodiments of the present application further provide a voice response apparatus.

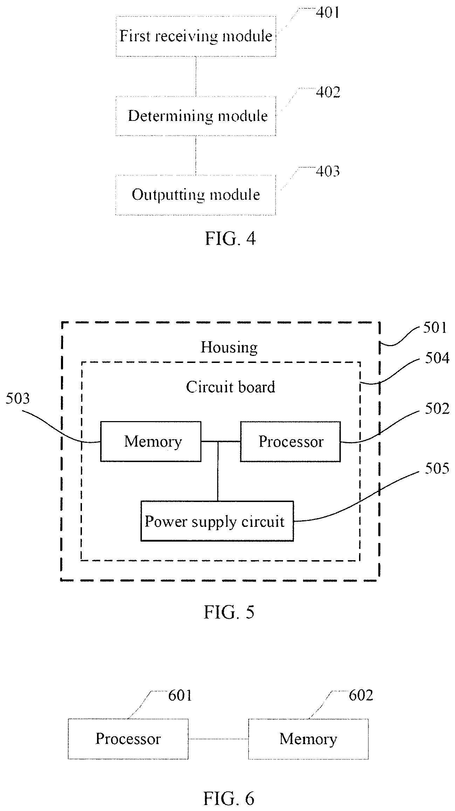

FIG. 4 shows a diagram depicting the structure of a voice response apparatus provided by an embodiment of the present application, which includes a first receiving module 401, a determining module 402, and an outputting module 403.

The first receiving module 401 is configured for receiving voice information sent by a user.

The determining module 402 is configured for determining whether is the voice information contains a wake-up word; and if so, triggering the outputting module.

The outputting module 403 is configured for outputting a response voice according to a preset response rule.

As an implementation manner, the determining module 402 is specifically configured for:
inputting the voice information into a pre-stored model for recognition, where the model is obtained by learning samples of voice information including the wake-up word; and determining whether the voice information contains a wake-up word according to a result of the determination; and if so, triggering the outputting module 403.

As an implementation manner, the outputting module 403 is specifically configured for:
selecting randomly a response mode from at least two preset response modes, and
outputting the response voice corresponding to the selected response mode;
or, determining a current time,
determining a response mode associated with the current time from a preset correspondence between time periods and response modes, and
outputting the response voice corresponding to the determined response mode.
As an implementation manner, the apparatus may further include a recording module.

The recording module (not shown in the figures) is configured for recording, after outputting the response voice, the response mode corresponding to the response voice as a last response mode.

The outputting module 403 is specifically configured for:
searching the last response mode in a pre-stored list of response modes,
determining a response mode after the last response mode in the list as a current response mode, and
outputting the response voice corresponding to the current response mode;
   or,
selecting a target response mode different from the last response mode from at least two preset response modes, and
outputting the response voice corresponding to the target response mode.

As an implementation manner, the apparatus may further include: a second receiving module and a first adjusting module (not shown in the figures).

The second receiving module is configured for receiving information for adjusting response modes sent by a cloud server.

The first adjusting module is configured for adjusting a response mode configured on the intelligent device with the information for adjusting response modes.

As an implementation manner, the outputting module 403 is specifically configured for:
determining a current time and news voice that corresponds to the current time and is sent by the cloud server; and outputting the response voice and the news voice.

As an implementation manner, the outputting module 403 is specifically configured for:
checking whether a current time period is associated with a voice for a marked event; and
if so, outputting the response voice and the voice for the marked event.

As an implementation manner, the apparatus may further include: a third receiving module and a second adjusting module (not shown in the figures).

The third receiving module is configured for receiving update information sent by the cloud server, the update information including a time period and an associated voice for a marked event; and
a second adjusting module, configured for adjusting a voice for a marked event stored on the intelligent device with the update information.

As an implementation manner, the apparatus may further include a noise eliminating module.

The noise eliminating module (not shown in the figures) is configured for determining the response voice as a noise to the intelligent device when the intelligent device receives the response voice; and eliminating the noise.

As an implementation manner, the apparatus may further include: an acquiring module, a fourth receiving module, a determination module, a merging module, and a sending module (not shown in the figures).

The acquiring module is configured for acquiring ambient sound information in the surroundings.

The fourth receiving module is configured for receiving new voice information sent by the user.

The determination module is configured for determining target ambient sound information from the ambient sound information, a time interval between the ambient sound information and the new voice information is in a preset range.

The merging module is configured for merging the new voice information and the target ambient sound information to merged voice information.

The sending module is configured for sending the merged voice information to the cloud server for analysis.

In responding a voice with the solution provided by the embodiment shown in FIG. 4, if there is a wake-up word in voice information received by the intelligent device, the intelligent device outputs a response voice according to a preset response rule. That is, after the user sends a wake-up word, the intelligent device outputs a voice to respond to the wake-up word. Therefore, the user can directly determine that the device has been woken up and can have a better experience.

Embodiments of the present application further provide an intelligent device. As shown in FIG. 5, intelligent device includes: a housing 501, a processor 502, a memory 503, a circuit board 504 and a power supply circuit 505. The circuit board 504 is arranged inside the space enclosed by the housing 501. The processor 502 and the memory 503 are arranged on the circuit board 504. The power supply circuit 505 is used to supply power for various circuits or means of the intelligent device. The memory 503 is used to store executable program codes. The processor 502 reads the executable program codes stored on the memory 503 to execute a program corresponding to the executable program codes, to carry out the voice response method, which includes:
receiving voice information sent by a user;
determining whether the voice information contains a wake-up word; and
if so, outputting a response voice according to a preset response rule.

The intelligent device may include, but not limited to, an intelligent speaker, an intelligent player, or an intelligent robot.

In responding to a voice with the solution provided by the embodiment shown in FIG. 5, if there is a wake-up word in voice information received by the intelligent device, the intelligent device outputs a response voice according to a preset response rule. That is, after the user sends a wake-up word, the intelligent device outputs a voice to respond to the wake-up word. Therefore, the user can directly determine that the device has been woken up and can have a better experience r.

The intelligent device provided by an embodiment of the present application may also be as shown in FIG. 6, including a processor 601 and a memory 602. The memory 602 is used to store executable program codes, and the processor 601 reads the executable program codes stored on the memory 602 to execute a program corresponding to executable program codes to perform any of the voice response methods mentioned above.

Embodiments of the present application further provide executable program codes that, when executed, perform any of the voice response methods mentioned above.

Embodiments of the application further provide an computer readable storage medium for storing executable program codes that, when executed, performs any of the voice response methods mentioned above.

It should be noted that the relationship terms used herein, such as "first", "second", and the like, are only used for distinguishing one entity or operation from another entity or operation, but do not necessarily require or imply that there is any actual relationship or order between these entities or operations. Moreover, the terms "include", "comprise" or any variants thereof are intended to cover non-exclusive inclusions, so that processes, methods, articles or devices comprising a series of elements comprise not only those elements listed but also those not specifically listed or the elements intrinsic to these processes, methods, articles, or devices. Without further limitations, elements defined by the sentences "comprise(s) a/an" or "include(s) a/an" do not exclude that there are other identical elements in the processes, methods, articles, or devices which include these elements.

All of the embodiments in the description are described in a correlated manner, and description of a component in an embodiment may apply to another containing the same.. In particular, a brief description is provided to embodiments of the voice response apparatuses shown in FIG. 4, of the intelligent device shown in FIG. 5 and FIG. 6, of the executable program codes, and of the computer readable storage medium, in view of their resemblance with the voice response method embodiments shown in FIGs. 1-3. Relevant details can be known with reference to the description of the voice response method embodiments shown in FIGs. 1-3.

Those of ordinary skills in the art will appreciate that all or some of the steps in the methods described above can be implemented by the associated hardware instructed by a program. The program may be stored in a computer-readable storage medium, such as a ROM/RAM, magnetic disk, optical disk, etc.

The embodiments described above are only preferable embodiments of the present application, and are not intended to limit the scope of protection of the present application.

## Claims

1. A voice response method, wherein the method is applicable to an intelligent device, comprising:
receiving voice information sent by a user (S101);
determining whether the voice information contains a wake-up word (S102); and
if so, outputting a response voice according to a preset response rule (S103);
wherein the step of outputting a response voice according to a preset response rule comprises:
selecting randomly a response mode from at least two preset response modes, and outputting the response voice corresponding to the selected response mode; or
determining a current time, determining a response mode associated with the current time from a preset correspondence between time periods and response modes, and outputting the response voice corresponding to the determined response mode; or
searching the last response mode in a pre-stored list of response modes, determining a response mode after the last response mode in the list as a current response mode according to their order in the list, and outputting the response voice corresponding to the current response mode, wherein, the last response mode is a response mode corresponding to the response voice recorded after the response voice was output last time; or
selecting a target response mode different from the last response mode from at least two preset response modes, and outputting the response voice corresponding to the target response mode, wherein, the last response mode is a response mode corresponding to the response voice recorded after the response voice was output last time,
wherein before the step of receiving the voice information sent by the user, the method further comprises:
acquiring ambient sound information in the surroundings (S301); and
wherein after the step of outputting a response voice according to a preset response rule, the method further comprises:
receiving new voice information sent by the user (S302);
determining target ambient sound information from the ambient sound information, wherein a time interval between the target ambient sound information and the new voice information is in a preset range (S303);
merging the new voice information and the target ambient sound information to merged voice information (S304); and
sending the merged voice information to a cloud server for analysis (S305).

2. The method of claim 1, wherein the step of determining whether the voice information contains a wake-up word comprises:
inputting the voice information into a pre-stored model for recognition, wherein the model is obtained by learning samples of voice information comprising the wake-up word; and
determining whether the voice information contains a wake-up word according to a result of the recognition.

3. The method of claim 1, further comprising:
receiving information for adjusting response modes sent by a cloud server; and
adjusting a response mode configured on the intelligent device with the information for adjusting response modes.

4. The method of claim 1, wherein the step of outputting a response voice according to a preset response rule comprises:
determining a current time and news voice that corresponds to the current time, the news voice being sent by a cloud server; and
outputting the response voice and the news voice.

5. The method of claim 1, wherein the step of outputting a response voice according to a preset response rule comprises:
checking whether a current time period is associated with a voice for a marked event; and
if so, outputting the response voice and the voice for the marked event.

6. The method of claim 5, further comprising:
receiving update information sent by the cloud server, the update information comprising a time period and an associated voice for a marked event; and
adjusting a voice for a marked event stored on the intelligent device with the update information.

7. The method of claim 1, wherein after the step of outputting a response voice according to a preset response rule, the method further comprises:
when the intelligent device receives the response voice, determining the response voice as a noise to the intelligent device (S201); and
eliminating the noise (S202).

8. An intelligent device, comprising a processor (502) and a memory (503), wherein the memory (503) is configured to store executable program codes, and the processor (502) executes a program corresponding to the executable program codes by reading the executable program codes stored on the memory (503) to perform the voice response method of any of claims 1-7.

9. A computer program comprising instructions which, when the program is executed by a computer, cause the computer to carry out the voice response method of any of claims 1-7.

10. A computer-readable storage medium having stored thereon the computer program of claim 9.

## Patentansprüche

1. Sprachantwortverfahren, wobei das Verfahren auf eine intelligente Vorrichtung anwendbar ist, umfassend:
Empfangen von Sprachinformationen, die von einem Benutzer gesendet wurden (S101);
Bestimmen, ob die Sprachinformation ein Weckwort enthält (S102); und
wenn ja, Ausgeben einer Antwortstimme gemäss einer voreingestellten Antwortregel (S103);
wobei der Schritt des Ausgebens einer Antwortstimme gemäss einer voreingestellten Antwortregel umfasst:
zufälliges Auswählen eines Antwortmodus aus mindestens zwei voreingestellten Antwortmodi und Ausgeben der Antwortstimme, die dem ausgewählten Antwortmodus entspricht; oder
Bestimmen einer aktuellen Zeit, Bestimmen eines mit der aktuellen Zeit assoziierten Antwortmodus aus einer voreingestellten Korrespondenz zwischen Zeitperioden und Antwortmodi, und Ausgeben der Antwortstimme entsprechend dem bestimmten Antwortmodus; oder
Suchen des letzten Antwortmodus in einer vorgespeicherten Liste von Antwortmodi, Bestimmen eines Antwortmodus nach dem letzten Antwortmodus in der Liste als aktueller Antwortmodus gemäss ihrer Reihenfolge in der Liste und Ausgeben der dem aktuellen Antwortmodus entsprechenden Antwortstimme, wobei der letzte Antwortmodus ein Antwortmodus ist, der der Antwortstimme entspricht, die aufgezeichnet wurde, nachdem die Antwortstimme das letzte Mal ausgegeben wurde; oder
Auswählen eines Ziel-Antwortmodus, der sich von dem letzten Antwortmodus unterscheidet, aus mindestens zwei voreingestellten Antwortmodi, und Ausgeben der Antwortstimme, die dem Ziel-Antwortmodus entspricht, wobei der letzte Antwortmodus ein Antwortmodus ist, der der Antwortstimme entspricht, die aufgezeichnet wurde, nachdem die Antwortstimme das letzte Mal ausgegeben wurde,
wobei das Verfahren vor dem Schritt des Empfangens der vom Benutzer gesendeten Sprachinformationen weiterhin umfasst:
Erfassen von Umgebungsgeräuschinformationen in der Umgebung (S301); und
wobei das Verfahren nach dem Schritt des Ausgebens einer Antwortstimme gemäss einer voreingestellten Antwortregel weiterhin umfasst:
Empfangen vom Benutzer gesendeter neuer Sprachinformationen (S302);
Bestimmen von Ziel-Umgebungsgeräuschinformationen aus den Umgebungsgeräuschinformationen, wobei ein Zeitintervall zwischen den Ziel-Umgebungsgeräuschinformationen und den neuen Sprachinformationen in einem voreingestellten Bereich liegt (S303);
Zusammenführen der neuen Sprachinformationen und der Ziel-Umgebungsgeräuschinformation zu zusammengeführten Sprachinformationen (S304); und
Senden der zusammengeführten Sprachinformationen zur Analyse an einen Cloud-Server (S305).

2. Verfahren nach Anspruch 1, wobei der Schritt des Bestimmens, ob die Sprachinformationen ein Weckwort enthält, umfasst:
Eingeben der Sprachinformationen in ein vorgespeichertes Modell zur Erkennung, wobei das Modell durch Lernen von Proben von Sprachinformationen, die das Weckwort enthalten, erhalten wird; und
Bestimmen, ob die Sprachinformationen ein Weckwort enthält, in Abhängigkeit von einem Ergebnis der Erkennung.

3. Verfahren nach Anspruch 1 ferner umfassend:
Empfangen von Informationen zum Einstellen von Antwortmodi, die von einem Cloud-Server gesendet werden; und
Einstellen eines auf dem intelligenten Gerät konfigurierten Reaktionsmodus mit den Informationen zum Einstellen der Reaktionsmodi.

4. Verfahren nach Anspruch 1, wobei der Schritt des Ausgebens einer Antwortstimme gemäss einer voreingestellten Antwortregel umfasst:
Bestimmen einer aktuellen Zeit und einer Nachrichtenstimme, die der aktuellen Zeit entspricht, wobei die Nachrichtenstimme von einem Cloud-Server gesendet wird; und
Ausgeben der Antwortstimme und der Nachrichtenstimme.

5. Verfahren nach Anspruch 1, wobei der Schritt des Ausgebens einer Antwortstimme gemäss einer voreingestellten Antwortregel umfasst:
Überprüfen, ob ein aktueller Zeitraum mit einer Stimme für ein markiertes Ereignis verbunden ist; und
wenn ja, Ausgeben der Antwortstimme und der Stimme für das markierte Ereignis.

6. Verfahren nach Anspruch 5 ferner umfassend:
Empfangen von Aktualisierungsinformationen, die von dem Cloud-Server gesendet werden, wobei die Aktualisierungsinformationen einen Zeitraum und eine zugehörige Stimme für ein markiertes Ereignis umfassen; und
Anpassen einer Stimme für ein markiertes Ereignis, das auf dem intelligenten Gerät gespeichert ist, an die Aktualisierungsinformationen.

7. Verfahren nach Anspruch 1, wobei das Verfahren nach dem Schritt des Ausgebens einer Antwortstimme gemäss einer voreingestellten Antwortregel ferner umfasst:
wenn die intelligente Vorrichtung die Antwortstimme empfängt, Bestimmen der Antwortstimme als ein Geräusch für die intelligente Vorrichtung (S201); und
Beseitigen des Rauschens (S202).

8. Intelligente Vorrichtung, die einen Prozessor (502) und einen Speicher (503) umfasst, wobei der Speicher (503) so konfiguriert ist, dass er ausführbare Programminstruktionen speichert, und der Prozessor (502) ein Programm ausführt, das den ausführbaren Programminstruktionen entspricht, indem er die in dem Speicher (503) gespeicherten ausführbaren Programminstruktionen liest, um das Sprachantwortverfahren nach einem der Ansprüche 1 bis 7 durchzuführen.

9. Computerprogramm umfassend Instruktionen, die, wenn das Programm von einem Computer ausgeführt wird, den Computer veranlassen, das Sprachantwortverfahren nach einem der Ansprüche 1 bis 7 auszuführen.

10. Computerlesbares Speichermedium, auf dem das Computerprogramm nach Anspruch 9 gespeichert ist.

## Revendications

1. Procédé de réponse vocale, dans lequel le procédé est applicable à un dispositif intelligent, comprenant :
recevoir des informations vocales envoyées par un utilisateur (S101) ;
déterminer si les informations vocales contiennent un mot de réveil (S102) ; et
dans l'affirmative, émettre une réponse vocale conformément à une règle de réponse prédéfinie (S103) ;
dans lequel l'étape consistant à émettre une voix de réponse en fonction d'une règle de réponse prédéfinie comprend :
sélectionner un mode de réponse de manière aléatoire parmi au moins deux modes de réponse prédéfinis, et émettre la voix de réponse correspondant au mode de réponse sélectionné ; ou
déterminer une heure courante, déterminer un mode de réponse associé à l'heure courante à partir d'une correspondance prédéfinie entre les périodes de temps et les modes de réponse, et émettre la voix de réponse correspondant au mode de réponse déterminé ; ou
rechercher le dernier mode de réponse dans une liste préenregistrée de modes de réponse, déterminer un mode de réponse après le dernier mode de réponse dans la liste comme mode de réponse courant selon leur ordre dans la liste, et émettre la voix de réponse correspondant au mode de réponse courant, dans lequel le dernier mode de réponse est un mode de réponse correspondant à la voix de réponse enregistrée après que la voix de réponse a été émise la dernière fois ; ou
sélectionner un mode de réponse cible différent du dernier mode de réponse parmi au moins deux modes de réponse prédéfinis, et émission de la voix de réponse correspondant au mode de réponse cible, le dernier mode de réponse étant un mode de réponse correspondant à la voix de réponse enregistrée après que la voix de réponse a été émise la dernière fois ;
dans lequel, avant l'étape de réception de l'information vocale envoyée par l'utilisateur, le procédé comprend en outre :
acquérir des informations sur le son ambiant dans l'environnement (S301) ; et
dans lequel, après l'étape consistant à émettre une voix de réponse en fonction d'une règle de réponse prédéfinie, le procédé comprend en outre :
recevoir de nouvelles informations vocales envoyées par l'utilisateur (S302) ;
déterminer des informations sur le son ambiant cible à partir des informations sur le son ambiant, l'intervalle de temps entre les informations sur le son ambiant cible et les nouvelles informations vocales se situant dans une plage prédéfinie (S303) ;
fusionner les nouvelles informations vocales et les informations sur le son ambiant cible pour obtenir des informations vocales fusionnées (S304) ; et
envoyer les informations vocales fusionnées à un serveur en nuage pour analyse (S305).

2. Procédé selon la revendication 1, dans lequel l'étape consistant à déterminer si l'information vocale contient un mot de réveil comprend :
saisir des informations vocales dans un modèle de reconnaissance préenregistré, dans lequel le modèle est obtenu par l'apprentissage d'échantillons d'informations vocales comprenant le mot de réveil ; et
déterminer si les informations vocales contiennent un mot de réveil en fonction du résultat de la reconnaissance.

3. Procédé selon la revendication 1, comprenant en outre :
recevoir des informations pour ajuster les modes de réponse envoyés par un serveur en nuage ; et
ajuster un mode de réponse configuré sur le dispositif intelligent à l'aide des informations permettant d'ajuster les modes de réponse.

4. Procédé selon la revendication 1, dans lequel l'étape d'émission d'une voix de réponse selon une règle de réponse prédéfinie comprend :
déterminer une heure actuelle et une voix d'information qui correspond à l'heure actuelle, la voix d'information étant envoyée par un serveur en nuage ; et
émettre la voix de réponse et de la voix d'information.

5. Procédé selon la revendication 1, dans lequel l'étape d'émission d'une voix de réponse selon une règle de réponse prédéfinie comprend :
vérifier si une période de temps actuelle est associée à une voix pour un événement marqué ; et
si c'est le cas, émettre la voix de la réponse et la voix pour un événement marqué.

6. Procédé selon la revendication 5, comprenant en outre :
recevoir des informations de mise à jour envoyées par le serveur en nuage, les informations de mise à jour comprenant une période de temps et une voix associée pour un événement marqué ; et
ajuster une voix pour un événement marqué stocké sur le dispositif intelligent à l'aide des informations de mise à jour.

7. Procédé selon la revendication 1, dans lequel après l'étape d'émission d'une voix de réponse en fonction d'une règle de réponse prédéfinie, le procédé comprend en outre :
lorsque le dispositif intelligent reçoit la voix de réponse, déterminer que la voix de réponse est un bruit pour le dispositif intelligent (S201) ; et
éliminer le bruit (S202).

8. Dispositif intelligent comprenant un processeur (502) et une mémoire (503), dans lequel la mémoire (503) est configurée pour stocker des codes de programme exécutables, et le processeur (502) exécute un programme correspondant aux codes de programme exécutables en lisant les codes de programme exécutables stockés sur la mémoire (503) pour exécuter le procédé de réponse vocale selon l'une quelconque des revendications 1 à 7.

9. Programme d'ordinateur comprenant des instructions qui, lorsque le programme est exécuté par un ordinateur, amènent ce dernier à mettre en œuvre le procédé de réponse vocale selon l'une quelconque des revendications 1 à 7.

10. Support de stockage lisible par ordinateur sur lequel est stocké le programme informatique selon la revendication 9.
